# EUROPÄISCHE PATENTSCHRIFT

(11) **EP 1 919 236 B1**
(45) Veröffentlichungstag und Bekanntmachung des Hinweises auf die Patenterteilung: **11.01.2012**
(21) Anmeldenummer: 06023065.3
(22) Anmeldetag: 06.11.2006
(51) Int. Cl.: H04W 36/18

(54) **Weiterleitung von Nutz- und Kontrollinformationen beim Soft Handover**
Relaying of payload and control information during soft handover
Retransmission d' informations utiles et d' informations de contrôle lors d'un transfert de cellule

(43) Veröffentlichungstag der Anmeldung: 07.05.2008
(73) Patentinhaber: Nokia Siemens Networks GmbH & Co. KG, 81541 München (DE)
(72) Erfinder: Breuer, Volker Dr., 16727 Bötzow (DE); Kottkamp, Meik, 81379 München (DE); Ulrich, Thomas, 67098 Bad Dürkheim (DE); Vesely, Alexander, 8330 Raabau (AT)

(56) Entgegenhaltungen:
- EP-A- 1 507 422
- WO-A-2005/022798
- WO-A-2005/048465
- HUAWEI, CHINA MOBILE: "Improvement of UL Macro Diversity Combining in Serving Node B" 3GPP TSG RAN WG2 #54, R3-061712, [Online] 1. November 2006 (2006-11-01), Seiten 1-3, XP002429632 Gefunden im Internet: URL:http://www.3gpp.org/ftp/tsg_ran/WG3_Iu /TSGR3_54/docs/> [gefunden am 2007-04-17]
- NOKIA: "SHO for SRB in HSPA volution architecture" 3GPP TSG RAN WG3 #53BIS, R3-061556, [Online] 10. Oktober 2006 (2006-10-10), - 13. Oktober 2006 (2006-10-13) Seiten 2-3, XP002429633 Gefunden im Internet: URL:http://www.3gpp.org/ftp/tsg_ran/WG3_Iu /TSGR3_53bis/docs/> [gefunden am 2007-04-17]

## Beschreibung

Die Erfindung betrifft ein Verfahren zur Kommunikation per Funk, bei dem eine erste und eine zweite netzseitige Funkstation von einer Teilnehmerstation gesendete Nutzinformationen und auf die Nutzinformationen bezogene Kontrollinformationen empfangen.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Ein weiteres Beispiel stellen Breitbandnetze mit drahtlosem Zugang beispielsweise gemäß IEEE 802.16 dar. Zukünftige Mobilfunkkommunikationssysteme können z.B. Weiterentwicklungen von UMTS, als LTE (Long Term Evolution) bezeichnet, oder Systeme der vierten Generation, sowie Ad-hoc-Netze sein. Außer weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Wird Leitungsvermittlung (englisch: circuit switching) eingesetzt, so wird einer Teilnehmerstation eine konstante Bandbreite bzw. Funkressourcen, welche eine Übertragung mit einer konstanten Datenrate ermöglichen, zur exklusiven Nutzung zugewiesen. Ein Beispiel für leitungsvermittelte Funkressourcen bei UMTS sind die dedizierten Kanäle, welche einem oder mehreren konstant einer bestimmten Teilnehmerstation zugewiesenen Kodes entsprechen. Bei der Paketvermittlung (englisch: packet switching) hingegen werden Funkkanäle verwendet, welche unter den Teilnehmerstationen aufgeteilt werden (englisch: shared channels). Diese Kanäle werden einer Teilnehmerstation lediglich kurzzeitig zugewiesen für die Versendung oder den Empfang eines Paketes. Ein Beispiel für einen Dienst mit paketvermittelten Ressourcen bei UMTS ist HSDPA (High Speed Downlink Packet Access), bei welchem einer Teilnehmerstation Funkressourcen für den Empfang von Datenpaketen zugewiesen werden, oder EDCH (Enhanced Dedicated Channel) bzw. HSUPA (High Speed Uplink Packet Access), bei welchem einer Teilnehmerstation Funkressourcen für die Versendung von Datenpaketen zugewiesen werden. Funkressourcen eines gemeinsamen Kanals bzw. paketvermittelte Funkressourcen werden einer Teilnehmerstation somit im Gegensatz zu leitungsvermittelten Funkressourcen nicht zugewiesen, wenn die Teilnehmerstation aktuell keine Nachrichten zu versenden oder empfangen hat.

Befindet sich eine Teilnehmerstation an der Grenze zwischen zwei Funkzellen, ist oftmals ein Wechsel der Verbindung der Teilnehmerstation von einer netzseitigen Funkstation zu einer anderen netzseitigen Funkstation nötig. Hierbei wird unterschieden zwischen einem Hard Handover, bei welchem die Verbindung zur alten netzseitigen Funkstation abgebaut wird, bevor eine Verbindung zur neuen netzseitigen Funkstation aufgebaut wird. Beim Soft Handover hingegen besteht während einer bestimmten Zeitspanne eine Verbindung der Teilnehmerstation zu der alten und der neuen netzseitigen Funkstation. Dies bedeutet, dass die Teilnehmerstation während dieser Zeitspanne Nachrichten an beide netzseitigen Funkstationen versendet und auch von beiden netzseitigen Funkstationen empfängt. Soft Handover werden beispielsweise bei UMTS eingesetzt.

Das Dokument von Huawei: "Improvement of UL Macro Diversity Combining in Serving Node B"; 3GPP TSG RAN WG3 #54, R3-061712; 01.11.206; Seiten 1 bis 3; XP002429632, offenbart ein Verfahren, bei dem ein RNC als netzseitige Einrichtung von verschiedenen netzseitigen Funkstationen Pakete empfängt und basierend auf einer Prüfsumme ein "Selection Combining" durchführt. Für das Selection Combining enthalten die Datenpakete eine Prüfsumme, anhand der die Qualität des Datenpakets ermittelt werden kann. Der RNC oder eine der netzseitigen Funkstationen ermittelt anhand der Prüfsumme, von welchen Funkstationen Datenpakete korrekt empfangen wurden, und leitet diese an eine höhere Schicht weiter. Bevorzugt führt bereits eine der netzseitigen Funkstationen das Selection Combining aus. Als Verbesserung dieses Verfahrens offenbart das Dokument, dass die netzseitige Funkstation, die das Selection Combining durchführt, von einer Teilnehmerstation Datenpakete empfängt. Falls die Prüfsumme dieser Datenpakete korrekt ist, leitet die netzseitige Funkstation die Pakete direkt zu einer höheren Schicht weiter und ignoriert die Benachrichtigungen von anderen Funkstationen, die mitteilen, dass sie ebenfalls Pakete der Teilnehmerstation empfangen haben. Falls die Prüfsumme nicht korrekt ist, wartet die Funkstation auf die Benachrichtigungen von anderen Funkstationen und wählt eine von diesen aus, Datenpakete weiterzuleiten. Eine andere Möglichkeit besteht darin, dass die Funkstation keine Aufforderung an die anderen Funkstationen sendet, falls die Prüfsumme nicht korrekt ist, sondern darauf wartet, dass die anderen Funkstationen Datenpakete übertragen, nachdem ein vorher definierter Timer abgelaufen ist.

Bei dem im Dokument offentbarten Verfahren werden nicht Kontrollinformationen von sämtlichen Funkstationen an eine netzseitige Einrichtung übertragen, und anhand der Kontrollinformationen eine Funkstation ausgewählt, die dann die Nutzinformationen überträgt. Stattdessen werden lediglich Datenpakete übertragen, die anhand einer Prüfsumme auf ihre Korrektheit kontrolliert werden.

Aus dem Dokument EP 1 507 422 ist ein Verfahren zur Steuerung einer Mehrzahl von Basisstationen in einem Mobilkommunikationssystem bekannt. In diesem Verfahren wird ebenfalls eine netzseitige Funkstation ausgewählt, die Daten und Steuerinformationen an einen RNC überträgt. Die netzseitigen Funkstationen werden derart gesteuert, dass nur eine Teilmenge oder bevorzugt nur eine einzige Funkstation Datenpakete, die von einer Teilnehmerstation empfangen werden, weiterleitet. Der RNC sucht die verantwortliche Funkstation anhand verschiedener Kriterien aus. Die verschiedenen Funkstationen empfangen Datenpakete von einer Teilnehmerstation und überprüfen die Korrektheit der Daten beispielsweise anhand einer Prüfsumme. Falls die verantwortliche Funkstation das Datenpaket korrekt empfangen hat, leitet diese das Paket an den RNC weiter. Ist das Datenpaket nicht korrekt, wird von der Funkstation eine Benachrichtigung an den RNC geschickt. Der RNC sendet eine Nachricht an die anderen Funkstationen, um zu überprüfen, ob eine dieser Funkstationen das Datenpaket korrekt empfangen hat. Wenn dies der Fall ist, sendet die entsprechende Funkstation das Datenpaket an den RNC. Bei diesem Verfahren werden nicht von sämtlichen Funkstationen die Kontrollinformationen an die netzseitige Einrichtung geschickt, die anhand dieser Kontrollinformationen dann eine Funkstation zur Übermittlung der Nutzdaten aussucht.

Der Erfindung liegt die Aufgabe zugrunde, ein Verfahren zur Kommunikation per Funk sowie ein Funkkommunikationssystem aufzuzeigen, welche einen effizienten Ablauf eines Handovers ermöglichen.

Diese Aufgabe wird durch ein Verfahren mit den Merkmalen des Anspruchs 1, sowie durch ein Funkkommunikationssystem mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zur Kommunikation per Funk empfangen eine erste netzseitige Funkstation und eine zweite netzseitige Funkstation von einer Teilnehmerstation gesendete Nutzinformationen und auf die Nutzinformationen bezogene Kontrollinformationen. Die erste netzseitige Funkstation und die zweite netzseitige Funkstation leiten die Kontrollinformationen weiter. Lediglich die erste netzseitige Funkstation leitet die Nutzinformationen weiter.

Eine Teilnehmerstation versendet somit sowohl Nutzinformationen als auch Kontrollinformationen. Hierbei besteht ein Bezug zwischen den Kontrollinformationen und den Nutzinformationen. Gemäß diesem Bezug können die Kontrollinformationen beispielsweise Parameter der Übertragung der Nutzinformationen angeben, oder die senderseitig durchgeführte Verarbeitung der Nutzinformationen beschreiben, oder eine empfängerseitig vorzunehmende Verarbeitung der Nutzinformationen vorgeben. Vorzugsweise sind die Kontrollinformationen so ausgestaltet, dass ihre Kenntnis für das Verständnis der Nutzinformationen unerlässlich ist.

Die beiden netzseitigen Funkstationen empfangen beide die von der Teilnehmerstation gesendeten Nutzinformationen und Kontrollinformationen. Dies ist insbesondere dann möglich, wenn es sich bei den beiden netzseitigen Funkstationen um benachbarte netzseitige Funkstationen handelt, d.h. um netzseitige Funkstationen, deren Funkzellen aneinander grenzen. Der Empfang der Nutzinformationen und Kontrollinformationen durch die beiden netzseitigen Funkstationen erfolgt in etwa gleichzeitig; unterschiedliche Empfangszeitpunkte können sich durch verschiedene Signallaufzeiten zwischen der Teilnehmerstation und der ersten netzseitigen Funkstation einerseits und der Teilnehmerstation und der zweiten netzseitigen Funkstation andererseits ergeben.

Es erfolgt eine Weiterleitung von empfangenen Informationen durch die netzseitigen Funkstationen. Diese Weiterleitung erfolgt zu einer oder mehreren anderen netzseitigen Einrichtungen zur weiteren Verarbeitung und/oder Weiterleitung. Vor der Weiterleitung durch die netzseitigen Funkstationen kann gegebenenfalls eine Verarbeitung der Informationen durch die erste und/oder die zweite netzseitige Funkstation erfolgen. Hinsichtlich der Weiterleitung durch die netzseitigen Funkstationen werden die Nutzinformationen und die Kontrollinformationen unterschiedlich behandelt: während die Kontrollinformationen von beiden netzseitigen Funkstationen weitergeleitet werden, beschränkt sich die Weiterleitung der Nutzinformationen auf eine Weiterleitung durch eine der beiden netzseitigen Funkstationen. Die zweifache Weiterleitung der Kontrollinformationen erfolgt vorzugsweise an die gleiche netzseitige Einrichtung, so dass diese die zweifach empfangenen Kontrollinformationen gemeinsam verarbeiten kann.

Es können neben der ersten und der zweiten netzseitigen Funkstation weitere netzseitige Funkstationen an dem Verfahren beteiligt sein. So ist es z.B. möglich, dass eine Weiterleitung der Kontrollinformationen durch drei netzseitige Funkstationen erfolgt, während die Nutzinformationen nur von einer oder zweien der drei netzseitigen Funkstationen weitergeleitet werden.

In Weiterbildung der Erfindung leiten die erste und die zweite netzseitige Funkstation die Kontrollinformationen an eine erste netzseitige Einrichtung weiter, und die erste netzseitige Funkstation leitet die Nutzinformationen auch an die erste netzseitige Einrichtung weiter. Es kommt somit eine netzseitige Einrichtung zum Einsatz, welche sowohl die Nutzinformationen als auch die Kontrollinformationen der Teilnehmerstation durch Weiterleitung empfängt.

Einer anderen Weiterbildung der Erfindung gemäß leiten die erste und die zweite netzseitige Funkstation die Kontrollinformationen an eine erste netzseitige Einrichtung weiter, und die erste netzseitige Funkstation leitet die Nutzinformationen an eine zweite netzseitige Einrichtung weiter. In diesem Fall empfängt die erste netzseitige Einrichtung lediglich die Kontrollinformationen, nicht aber die Nutzinformationen. Vorteilhaft ist es, wenn es sich bei der zweiten netzseitigen Einrichtung um eine Einrichtung handelt, welche die Kontrollinformationen von der ersten netzseitigen Einrichtung durch Weiterleitung empfängt. In diesem Fall werden die Kontrollinformationen über einen über die erste netzseitige Einrichtung verlaufenden Umweg zur zweiten netzseitigen Einrichtung übertragen. Dieser Umweg kann z.B. aus dem Grund gewählt werden, dass die erste netzseitige Einrichtung einen Bearbeitungsschritt an den Kontrollinformationen durchführt.

Besonders vorteilhaft ist es, wenn die erste netzseitige Einrichtung der ersten und/oder der zweiten netzseitigen Funkstation Anweisungen sendet, wobei die Anweisungen die Weiterleitung der Nutzinformationen betreffen. Die Anweisungen können z.B. indizieren, welche netzseitige Funkstation die Nutzinformationen weiterleiten soll, oder an welche netzseitige Einrichtung die Nutzinformationen weiterzuleiten sind. Vorzugsweise trifft die erste netzseitige Einrichtung die Entscheidung über den Inhalt der Anweisungen. Dies ist besonders vorteilhaft, wenn die erste netzseitige Einrichtung der Empfänger der weitergeleiteten Kontrollinformationen ist, so dass die empfangenen Kontrollinformationen von der ersten netzseitige Einrichtung als Entscheidungskriterium herangezogen werden können.

Einer Ausgestaltung der Erfindung gemäß kombiniert die erste netzseitige Einrichtung die von der ersten netzseitigen Funkstation empfangenen Kontrollinformationen mit den von der zweiten netzseitigen Funkstation empfangenen Kontrollinformationen und leitet die resultierenden Kontrollinformationen weiter. Diese Kombination kann auf verschiedene Weisen erfolgen, z.B. durch Vergleich der beiden Kontrollinformationen und Auswahl der besseren.

Bei der ersten netzseitigen Einrichtung kann es sich um einen Bestandteil der ersten oder der zweiten netzseitigen Funkstation handeln. In diesem Fall leitet die erste netzseitige Funkstation die Kontrollinformationen an die zweite netzseitige Funkstation weiter, oder umgekehrt. Der betreffenden netzseitigen Funkstation liegen in diesem Fall sowohl die von ihr als auch die von der anderen netzseitigen Funkstation empfangenen Kontrollinformationen vor.

Vorteilhaft ist es, wenn die erste netzseitige Funkstation die Nutzinformationen mit höherer Empfangsleistung empfängt als die zweite netzseitige Funkstation. Dies eignet sich, da hierdurch die Weiterleitung der Nutzinformationen mit höherer Qualität gewährleistet wird als wenn die zweite netzseitige Funkstation die Nutzinformationen weiterleiten würde. Die Empfangsleistung kann als Kriterium zur Entscheidung darüber verwendet werden, welche netzseitige Funkstation die Weiterleitung der Nutzinformationen durchführen soll.

Es kann ein Wechsel bei der Weiterleitung der Nutzinformationen erfolgen. So ist es möglich, dass zu einem späteren Zeitpunkt die erste und die zweite netzseitige Funkstation die Kontrollinformationen weiterleiten, während lediglich die zweite netzseitige Funkstation die Nutzinformationen weiterleitet. In diesem Fall ist die Aufgabe der Weiterleitung der Nutzinformationen von der ersten netzseitigen Funkstation auf die zweite netzseitige Funkstation übergegangen. Alternativ können zu einem späteren oder früheren Zeitpunkt die erste und die zweite netzseitige Funkstation die Kontrollinformationen weiterleiten, während die erste und die zweite netzseitige Funkstation die Nutzinformationen weiterleiten. In diesem Fall erfolgt die Weiterleitung der Nutzinformationen zeitweise durch nur eine der beiden netzseitigen Funkstationen, und zeitweise durch beide netzseitige Funkstationen.

In Ausgestaltung der Erfindung erfolgt die Übertragung der Nutzinformationen zu der ersten und der zweiten netzseitigen Funkstation unter Verwendung eines mehreren Teilnehmerstationen gemeinsamen Aufwärtsrichtungs-Kanals. Ein solcher gemeinsamer Kanal steht nicht ausschließlich im Sinne eines dedizierten Kanals lediglich einer Teilnehmerstation zur Verfügung. Vielmehr wird er für die Versendung einzelner Informationspakete zeitweise einzelnen Teilnehmerstationen zugewiesen.

Das Verfahren kann in Bezug auf eine Mehrzahl von Teilnehmerstationen durchgeführt werden. Hierbei leitet lediglich die erste netzseitige Funkstation von einer oder mehreren ersten Teilnehmerstationen empfangene Nutzinformationen weiter, und lediglich die zweite netzseitige Funkstation leitet von einer oder mehreren zweiten Teilnehmerstationen empfangene Nutzinformationen weiter. Die Durchführung des Verfahrens in Bezug auf eine Mehrzahl von Teilnehmerstationen bedeutet, dass mehrere Teilnehmerstationen jeweils Nutzinformationen und Kontrollinformationen versenden. Die erste und die zweite netzseitige Funkstation empfangen die Nutzinformationen und Kontrollinformationen, und beide netzseitige Funkstationen leiten die Kontrollinformationen weiter. Die Weiterleitung der Nutzinformationen hingegen erfolgt nur durch eine der beiden netzseitigen Funkstationen. Hierbei kann die die Nutzinformationen weiterleitende netzseitige Funkstation von Teilnehmerstation zu Teilnehmerstation eine andere sein.

Besonders vorteilhaft ist es, wenn von der ersten und der zweiten netzseitigen Funkstation die Nutzinformationen der ersten Teilnehmerstationen innerhalb einer ersten Zeitspanne empfangen werden und die Nutzinformationen der zweiten Teilnehmerstationen innerhalb einer zweiten Zeitspanne empfangen werden. Es wird somit ein Block von aufeinanderfolgenden Nutzinformationen empfangen, welche von der ersten netzseitigen Funkstation weiterzuleiten sind, und darauffolgend oder zuvor ein Block von aufeinanderfolgenden Nutzinformationen, welche von der zweiten netzseitigen Funkstation weiterzuleiten sind. Die unterschiedlichen Blöcke können zeitlich direkt aufeinander folgen oder durch eine Schutzzeit zur Vermeidung von Überschneidungen getrennt sein.

Das erfindungsgemäße Funkkommunikationssystem umfasst zumindest eine erste und eine zweite netzseitige Funkstation. Es sind Mittel der ersten und der zweiten netzseitigen Funkstation vorhanden zum Empfangen von von einer Teilnehmerstation gesendeten Nutzinformationen und auf die Nutzinformationen bezogenen Kontrollinformationen, sowie Mittel zum Weiterleiten der Kontrollinformationen durch die erste und die zweite netzseitige Funkstation, und zum Weiterleiten der Nutzinformationen lediglich durch die erste netzseitige Funkstation.

Das erfindungsgemäße Funkkommunikationssystem eignet sich insbesondere zur Durchführung des erfindungsgemäßen Verfahrens, wobei dies auch auf die Ausgestaltungen und Weiterbildungen zutreffen kann. Hierzu kann es weitere geeignete Mittel umfassen, wie z.B. Mittel zur Steuerung der Weiterleitung der Nutzinformationen und Kontrollinformationen.

Im folgenden wird die Erfindung anhand eines Ausführungsbeispiels näher erläutert. Dabei zeigen:
- Figur 1:: einen Ausschnitt aus einem Funkkommunikationssystem mit einer ersten Verbindungskonstellation,
- Figur 2:: eine zweite Verbindungskonstellation,
- Figur 3:: eine dritte Verbindungskonstellation,
- Figur 4:: eine vierte Verbindungskonstellation,
- Figur 5:: eine Weiterleitung von Informationen mehrerer Teilnehmerstationen.

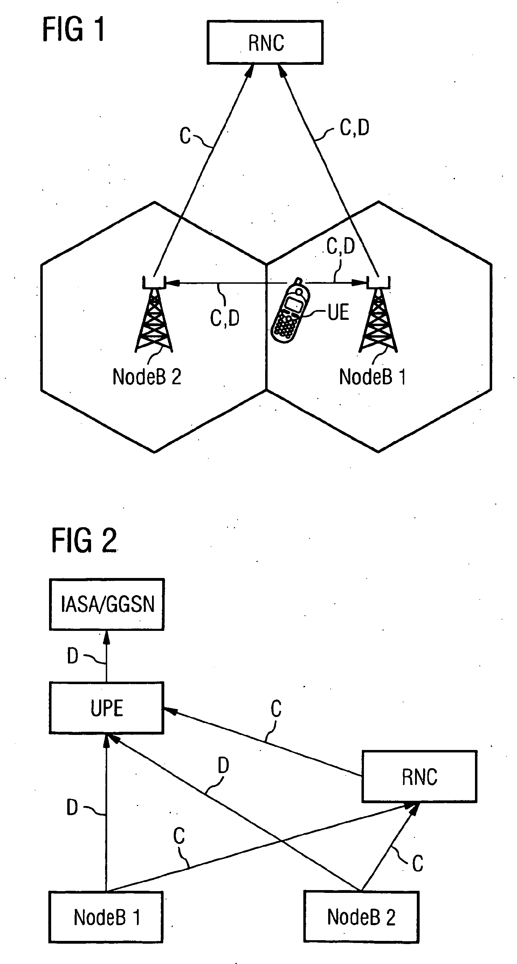

Die Erfindung ist auf verschiedene Arten von Funkkommunikationssystemen anwendbar. Im folgenden wird als konkretes Beispiel ein Mobilfunkkommunikationssystem nach dem Standard UMTS betrachtet. Die Erfindung ist jedoch nicht auf derartige Systeme beschränkt, insbesondere kann es sich bei dem betrachteten Mobilfunkkommunikationssystem auch um ein System gemäß einer Weiterentwicklung von UMTS, als LTE (Long Term Evolution) bezeichnet, handeln. Der in Figur 1 dargestellte Ausschnitt aus dem Mobilfunkkommunikationssystem zeigt die Funkzelle der netzseitigen Funkstation NodeB 1, sowie die Funkzelle der benachbarten netzseitigen Funkstation NodeB 2. Die netzseitigen Funkstationen NodeB 1 und NodeB 2 kommunizieren jeweils mit Teilnehmerstationen, wie z.B. mit der Teilnehmerstation UE. Über eine bei UMTS als Iub bezeichnete Schnittstelle sind die netzseitigen Funkstationen NodeB 1 und NodeB 2 mit der Kontrolleinrichtung RNC (Radio Network Controller) verbunden, welche für die Kontrolle und Überwachung von Funkverbindungen zuständig ist, z.B. für die Verwaltung von Kodes und Zellwechsel (Handover). Die Übertragung von Informationen zwischen den netzseitigen Funkstationen NodeB 1 und NodeB 2 und der Kontrolleinrichtung RNC kann über ATM erfolgen; bei UMTS ist hierfür seit Release 5 auch die Verwendung von IP standardisiert. Die Kontrolleinrichtung RNC ist üblicherweise für eine Vielzahl von netzseitigen Funkstationen zuständig. Aus Gründen der Übersichtlichkeit sind weitere Funkzellen, Teilnehmerstationen und netzseitige Einrichtungen nicht in Figur 1 dargestellt.

Befindet sich die Teilnehmerstation UE an der Zellgrenze zwischen Funkzellen verschiedener netzseitiger Funkstationen, so wie z.B. in Figur 1 dargestellt, wird für die Nachrichtenversendung in Aufwärtsrichtung, d.h. von der Teilnehmerstation UE an netzseitige Funkstationen, der so genannte Soft Handover Modus eingesetzt. Unter Soft Handover wird verstanden, dass mehrere netzseitige Funkstationen von der Teilnehmerstation UE gesendete Nachrichten empfangen und diese weiterleiten. Im Anschluss an diese Weiterleitung wird eine Kombination der von den verschiedenen netzseitigen Funkstationen weitergeleiteten Nachrichten durchgeführt, im folgenden als Soft Combining bezeichnet. Hierdurch wird die netzseitig vorliegende Qualität der Nachrichten der Teilnehmerstation erhöht. Dieses Vorgehen ist für Teilnehmerstationen am Zellrand vorteilhaft, da zwischen einer am Zellrand befindlichen Teilnehmerstation und der netzseitigen Funkstationen der jeweiligen Funkzelle oder einer benachbarten Funkzelle in der Regel eine schlechte Funkverbindung vorliegt. Im folgenden wird davon ausgegangen, dass für die Teilnehmerstation UE die Verwendung des Soft Handover Modus entschieden wurde.

Es wird die Situation betrachtet, dass die Teilnehmerstation UE den Dienst EDCH (Enhanced Dedicated Channel), auch als HSUPA (High Speed Uplink Packet Access) bezeichnet, verwendet. Hierbei handelt es sich um ein Übertragungsverfahren für UMTS, welches hohe Datenraten in Aufwärtsrichtung ermöglichen soll. Hierdurch liegt ein komplementärer Dienst zu HSDPA (High Speed Downlink Packet Access) vor. Bei EDCH handelt es sich um einen paketvermittelten (englisch: packet switched) Dienst, daher steht ein EDCH-Kode einer Teilnehmerstation nicht permanent, sondern lediglich zeitweise zur paketweisen Versendung von Informationen zur Verfügung; die EDCH-Kanäle sind daher als gemeinsame Kanäle (englisch: shared channels) ausgebildet. Die physikalischen Kanäle zur Übertragung der Nutzinformationen werden mit EDPDCH (Enhanced Dedicated Physical Data Channel) bezeichnet; diejenigen zur Übertragung von Kontrollinformationen werden mit EDPCCH (Enhanced Dedicated Physical Control Channel) bezeichnet. Die Kontrollinformationen des EDPCCH beziehen sich hierbei auf die Nutzinformationen des EDPDCH, z.B. umfassen sie eine Pilot- bzw. Trainingssequenz und/oder einen Transport-Format-Kombinations-Indikator. Somit enthalten die Kontrollinformationen des EDPCCH Informationen, welche empfängerseitig zur Verarbeitung der Nutzinformationen des EDPDCH nötig sind. Ohne den Inhalt der Kontrollinformationen können die Nutzinformationen empfängerseitig nicht korrekt verstanden werden.

In der in Figur 1 dargestellten Situation versendet die aktuell den Dienst EDCH nutzende Teilnehmerstation UE die Kontrollinformationen C, sowie die Nutzinformationen D, wobei sowohl die Kontrollinformationen C als auch die Nutzinformationen D von beiden netzseitigen Funkstationen NodeB 1 und NodeB 2 empfangen werden. Aufgrund der erläuterten Wichtigkeit der Kontrollinformationen C werden diese mit starker Fehlerschutzkodierung und hoher Sendeleistung von der Teilnehmerstation UE ausgestrahlt. Die Qualität der Kontrollinformationen C wird weiterhin gesteigert, indem in der Kontrolleinrichtung RNC ein Soft Combining der von der netzseitigen Funkstation NodeB 1 empfangenen Kontrollinformationen C und der von der netzseitigen Funkstation NodeB 2 empfangenen Kontrollinformationen C stattfindet. Denn beide netzseitigen Funkstationen NodeB 1 und NodeB 2 leiten die Kontrollinformationen C an die Kontrolleinrichtung RNC weiter.

Im Gegensatz zu den Kontrollinformationen C werden die Nutzinformationen D nicht von beiden netzseitigen Funkstationen NodeB 1 und NodeB 2 weitergeleitet. Vielmehr führt lediglich die netzseitige Funkstation NodeB 1 eine Weiterleitung der Nutzinformationen D lediglich durch. Es werden somit die Kontrollinformationen C und die Nutzinformationen D im Hinblick auf die Weiterleitung und somit auch auf das Soft Combining unterschiedlich behandelt.

Dieses Vorgehen hat den Vorteil, dass weniger Übertragungskapazität auf der Schnittstelle zwischen den netzseitigen Funkstationen NodeB 1 und NodeB 2 und der Kontrolleinrichtung RNC benötigt wird. Bei dem Zur-Verfügung-Stellen der Übertragungskapazität auf dieser Schnittstelle handelt es sich um einen bedeutenden Teil des OPEX (Operation Expenditures) eines Funkkommunikationssystems. Eine Reduktion des Datenaufkommens über diese Schnittstelle ist daher erstrebenswert. Auf das Soft Combining der Kontrollinformationen C wird dennoch nicht verzichtet, denn einerseits sind die Kontrollinformationen C wie oben erläutert von großer Wichtigkeit, und andererseits ist der Umfang der Kontrollinformationen C lediglich gering, so dass die Belastung der betrachteten Schnittstelle durch die Kontrollinformationen C nicht bedeutend ist.

Um trotz der lediglich einfachen Weiterleitung der Nutzinformationen D eine gute Qualität der netzseitig vorliegenden Nutzinformationen D erzielen zu können, ist es vorteilhaft, wenn für die Übertragung der Nutzinformationen D lediglich kurze Nachrichten gewählt werden. So ermöglich es die Release 6 des UMTS Standards, für EDCH 2 ms lange TTI's (TTI: Transmission Time Interval) anstelle von 10 ms langen TTI's zu verwenden. Durch kurze Nachrichten wird die Wahrscheinlichkeit für Kollisionen zwischen Nachrichten verschiedener Teilnehmerstationen reduziert.

Die Entscheidung, dass die netzseitige Funkstation NodeB 1 die Weiterleitung der Nutzinformationen D übernimmt, nicht jedoch die netzseitige Funkstation NodeB 2, wird von der Kontrolleinrichtung RNC getroffen. Als Entscheidungsparameter wird vorzugsweise die Qualität der von den netzseitigen Funkstationen NodeB 1 und NodeB 2 empfangenen Kontrollinformationen C herangezogen. Denn wenn eine netzseitige Funkstation die Kontrollinformationen C mit höherer Empfangsleistung empfängt als eine andere netzseitige Funkstation, so trifft dies auch auf die Nutzinformationen D zu. Es kann beispielsweise ein Schwellenwert eingesetzt werden, mit welchem die Empfangsleistungen verglichen werden. Die Kontrolleinrichtung RNC informiert die netzseitigen Funkstationen NodeB 1 und NodeB 2 darüber, durch welche netzseitige Funkstation eine Weiterleitung der Nutzinformationen D erfolgen soll.

Die Weiterleitung der Nutzinformationen D erfolgt somit alternativ durch die netzseitige Funkstation NodeB 1 oder die netzseitige Funkstation NodeB 2. Abweichend hiervon ist es zeitweise oder für manche Teilnehmerstationen möglich, dass beide netzseitige Funkstationen NodeB 1 und NodeB 2 die Nutzinformationen D weiterleiten. Bewegt sich die Teilnehmerstation UE beispielsweise von der Funkzelle der netzseitigen Funkstation NodeB 1 in die Funkzelle der netzseitigen Funkstation NodeB 2, so ist es möglich, dass zuerst die Weiterleitung der Nutzinformationen D durch die netzseitige Funkstation NodeB 1 erfolgt, im Anschluss durch beide netzseitigen Funkstationen NodeB 1 und NodeB 2, und danach durch die netzseitige Funkstation NodeB 2. Die Weiterleitung der Kontrollinformationen C hingegen wird unverändert von beiden netzseitigen Funkstationen NodeB 1 und NodeB 2 durchgeführt. Die Entscheidung zum Wechsel wird hierbei wie oben erläutert von der Kontrolleinrichtung RNC getroffen.

Figur 2 zeigt eine alternative Konstellation des Funkkommunikationssystems. Hierbei werden wie anhand von Figur 1 erläutert die Kontrollinformationen C von den netzseitigen Funkstationen NodeB 1 und NodeB 2 an die Kontrolleinrichtung RNC weitergeleitet, wo das Soft Combining stattfindet. Die Weiterleitung der Nutzinformationen D hingegen erfolgt nicht an die Kontrolleinrichtung RNC, sondern an die Einrichtung UPE (User Plane Entity), welche die Nutzinformationen D an weitere netzseitige Einrichtungen IASA/GGSN weiterleitet (IASA: Inter Access System Anchor, ein Ankerpunkt, der auch bei Übergang einer Verbindung in ein nicht 3GPP System, wie z.B. ein WLAN, konstant bleibt) (GGSN: Gateway GPRS Support Node). Die Weiterleitung der Nutzinformationen D wird durch die Kontrolleinrichtung RNC gesteuert, welche wie in Bezug auf Figur 1 erläutert bestimmt, durch welche netzseitigen Funkstation die Weiterleitung durchzuführen ist.

Bei der Einrichtung UPE handelt es sich um eine innerhalb des Netzwerkarchitektur höhere Einrichtung als die Kontrolleinrichtung RNC, so dass der Verzicht auf die Weiterleitung der Nutzinformationen D über die Kontrolleinrichtung RNC eine raschere netzseitige Verarbeitung der Nutzinformationen D ermöglicht. Netzwerkarchitekturen unter Verwendung der Einrichtung UPE werden z.B. beschrieben in 3GPP TS 23.882.

Wie anhand von Figur 1 erläutert entscheidet die Kontrolleinrichtung RNC, welche netzseitige Funkstation NodeB 1 oder NodeB 2 oder auch NodeB 1 und NodeB 2 die Nutzinformationen D weiterleiten soll und teilt den netzseitigen Funkstationen NodeB 1 und NodeB 2 dies mit. Eine Weiterleitung der dem Soft Combining bereits unterzogenen Kontrollinformationen C durch die Kontrolleinrichtung RNC an die Einrichtung UPE findet statt, da die Einrichtung UPE die Kontrollinformationen C zur Verarbeitung der Nutzinformationen D benötigt.

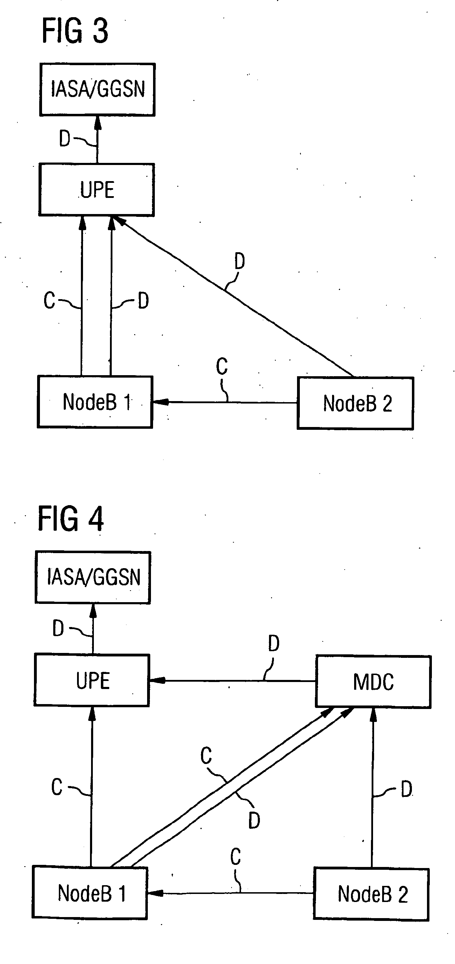

Figur 3 zeigt eine weitere Konstellation, wobei hier die Funktionalität der Kontrolleinrichtung RNC der Figur 2 durch die netzseitige Funkstation NodeB 1 wahrgenommen wird. In diesem Fall sendet die netzseitige Funkstation NodeB 2 die von ihr empfangenen Kontrollinformationen C an die netzseitige Funkstation NodeB 1, welche diese mit der von ihr empfangenen Kontrollinformationen C kombiniert. Die Versendung der Nutzinformationen erfolgt alternativ durch die netzseitige Funkstation NodeB 1 oder NodeB 2, oder auch die beide netzseitige Funkstationen NodeB 1 und NodeB 2, gesteuert durch die netzseitige Funkstationen NodeB 1.

Eine weitere alternative Konstellation zeigt Figur 4. Hier ist wie auch bei Figur 3 die Funktionalität der Kontrolleinrichtung RNC der Figur 2 durch die netzseitige Funkstation NodeB 1 übernommen. Die Weiterleitung der Nutzinformationen D von den netzseitigen Funkstationen NodeB 1 und/oder NodeB 2 erfolgt nicht direkt an die Einrichtung UPE, sondern an die Einrichtung MDC, welche die empfangenen Nutzinformationen D an die Einrichtung UPE weiterleitet. Die Weiterleitung erfolgt wie oben erläutert alternativ durch die netzseitige Funkstation NodeB 1 oder NodeB 2. Im Fall, dass die Nutzinformationen D von beiden netzseitigen Funkstationen NodeB 1 und NodeB 2 an die Einrichtung MDC gesendet werden, führt die Einrichtung MDC ein Soft Combining der Nutzinformationen D durch und leitet die kombinierten Nutzinformationen D an die Einrichtung UPE weiter.

Während die Erfindung anhand der beiden benachbarten netzseitigen Funkstationen NodeB 1 und NodeB 2 erläutert wurde, ist sie auch auf eine größere Anzahl benachbarter netzseitigen Funkstationen anwendbar. So können die Kontrollinformationen C beispielsweise von drei netzseitigen Funkstationen für das Soft Combining weitergeleitet werden, während eine Weiterleitung der Nutzinformationen D lediglich durch eine der netzseitigen Funkstationen, oder alternativ durch zwei oder drei der netzseitigen Funkstationen erfolgt.

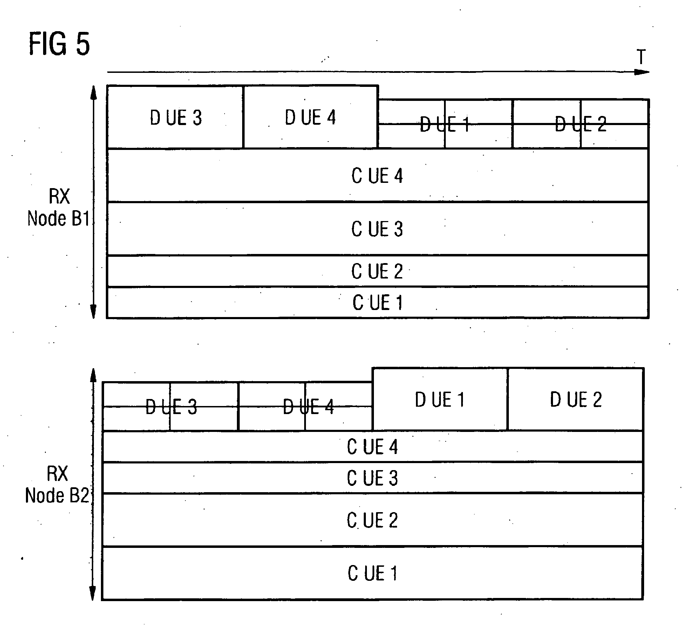

Auch ist die Erfindung auf eine größere Anzahl an Teilnehmerstationen anwendbar. Figur 5 zeigt schematisch die Weiterleitung von Nutzinformationen D und Kontrollinformationen C der vier Teilnehmerstationen UE1, UE2, UE3 und UE4. Diese vier Teilnehmerstationen UE1, UE2, UE3 und UE4 befinden sich aktuell im Soft Handover Modus im Gebiet zwischen den netzseitigen Funkstationen NodeB1 und NodeB2. Der obere Teil von Figur 5 zeigt die Empfangsstärke RX der Nutzinformationen D und Kontrollinformationen C der vier Teilnehmerstationen UE1, UE2, UE3 und UE4 in der netzseitigen Funkstation NodeB 1, der untere die Empfangsstärke RX der Nutzinformationen D und Kontrollinformationen C der vier Teilnehmerstationen UE1, UE2, UE3 und UE4 in der netzseitigen Funkstation NodeB 2. Die Empfangsstärke RX entspricht jeweils der vertikalen Ausdehnung eines Rechtecks. Der Verlauf der Zeit T ist nach rechts aufgetragen. Die Länge der Nutzinformationsnachrichten, jeweils oberhalb der Kontrollinformationsnachrichten dargestellt, ist kürzer als die Länge der Kontrollinformationsnachrichten.

Die netzseitige Funkstation NodeB 1 empfängt die Nutzinformationen D und Kontrollinformationen C der beiden Teilnehmerstationen UE3 und UE4 mit höherer Empfangsstärke RX als die netzseitige Funkstation NodeB 2; umgekehrtes gilt für die Nutzinformationen D und Kontrollinformationen C der beiden Teilnehmerstationen UE1 und UE2. Dementsprechend wird entschieden, dass die netzseitige Funkstation NodeB 1 die Nutzinformationen D der beiden Teilnehmerstationen UE3 und UE4 weiterleitet, während die netzseitige Funkstation NodeB 2 die Nutzinformationen D der beiden Teilnehmerstationen UE1 und UE2 weiterleitet. Die nicht weitergeleiteten Nutzinformationen D sind jeweils durchgestrichen dargestellt. Die Kontrollinformationen C der Teilnehmerstationen UE1, UE2, UE3 und UE4 werden von beiden netzseitigen Funkstationen NodeB 1 und NodeB 2 weitergeleitet.

Die Teilnehmerstationen UE1, UE2, UE3 und UE4 im Soft Handover Modus werden von einer der beiden netzseitigen Funkstationen NodeB 1 und NodeB 2 kontrolliert, d.h. an jede der Teilnehmerstationen UE1, UE2, UE3 und UE4 sendet eine der beiden netzseitigen Funkstationen NodeB 1 und NodeB 2 Kontrollinformationen betreffend z.B. die von der Teilnehmerstation UE1, UE2, UE3, UE4 anzuwendenden Sendeleistung und Sendezeitpunkte. Es wird im folgenden davon ausgegangen, dass die Teilnehmerstationen UE1 und UE2 von der netzseitigen Funkstation NodeB 2, und die Teilnehmerstationen UE3 und UE4 von der netzseitigen Funkstation NodeB 1 kontrolliert werden. Die Teilnehmerstationen UE1, UE2, UE3 und UE4 werden bezüglich ihrer Nutzinformationen D derart geschedult, dass diejenigen Teilnehmerstationen UE3 und UE4, deren Nutzinformationen D von der netzseitigen Funkstation NodeB 1 weitergeleitet werden, zeitlich beieinander liegen und somit einen Block bilden. Entsprechendes gilt für die von der netzseitigen Funkstation NodeB 2 geschedulten Teilnehmerstationen UE1 und UE2.

Diese Gruppierung von Teilnehmerstationen ist insbesondere für den asynchronen Betrieb von Vorteil. Figur 5 zeigt den synchronen Betrieb, d.h. die netzseitige Funkstation NodeB 1 empfängt die Nutzinformationen D und Kontrollinformationen C der von ihre geschedulten Teilnehmerstationen UE3 und UE4 jeweils zu Beginn ihres Zeitrahmens, und ebenso empfängt sie die Nutzinformationen D und Kontrollinformationen C der von der netzseitigen Funkstation NodeB 2 geschedulten Teilnehmerstationen UE1 und UE2 jeweils zu Beginn ihres Zeitrahmens. Entsprechendes gilt für die netzseitige Funkstation NodeB 2. Bei einem asynchronen Betrieb hingegen sind die Zeitrahmen der netzseitigen Funkstationen NodeB 1 und NodeB 2 gegeneinander verschoben. Wenn im asynchronen Fall keine Pause zwischen der Versendung der Nutzinformationen D der Teilnehmerstation UE4, d.h. der letzten Teilnehmerstation des Blockes der netzseitigen Funkstation NodeB 1, und der Versendung der Nutzinformationen D der Teilnehmerstation UE1, d.h. der ersten Teilnehmerstation des Blockes der netzseitigen Funkstation NodeB 2, eingehalten wird, kann es aufgrund der zeitlichen Verschiebung der Zeitrahmen zu einer Interferenz der von der netzseitigen Funkstation NodeB 1 weitergeleiteten Nutzinformationen D der Teilnehmerstation UE4 und der von der netzseitigen Funkstation NodeB 2 weitergeleiteten Nutzinformationen D der Teilnehmerstation UE1 kommen. Um dies zu vermeiden, wird für den asynchronen Betrieb das Scheduling der Teilnehmerstationen derart vorgenommen, dass zwischen der Versendung der Nutzinformationen D durch die Teilnehmerstation UE4 und der Versendung der Nutzinformationen D durch die Teilnehmerstation UE4 eine Schutzzeitspanne (englisch: guard period) liegt, in welcher keine Teilnehmerstation Nutzinformationen D versendet. Diese Schutzzeitspanne sollte in etwa dem Synchronisationsunterschied zwischen den Zeitrahmen der netzseitigen Funkstationen NodeB 1 und NodeB 2 entsprechen. Da die Schutzzeitspanne lediglich zwischen dem Block der netzseitigen Funkstation NodeB 1 und dem Block der netzseitigen Funkstation NodeB 2 nötig ist, steigert die Gruppierung der Teilnehmerstationen UE1, UE2, UE3, UE4 die Ausnutzung der Funkressourcen.

## Patentansprüche

1. Verfahren zur Kommunikation per Funk, bei dem eine erste netzseitige Funkstation (NodeB 1) und eine zweite netzseitige Funkstation (NodeB 2) von einer Teilnehmerstation (UE) gesendete Nutzinformationen (D) und auf die Nutzinformationen (D) bezogene Kontrollinformationen (C) empfangen,
**dadurch gekennzeichnet,**
**dass** die erste netzseitige Funkstation (NodeB 1) und die zweite netzseitige Funkstation (NodeB 2) die Kontrollinformationen (C) an eine erste netzseitige Einrichtung (RNC) weiterleiten, und
**dass** lediglich die erste netzseitige Funkstation (NodeB 1) die Nutzinformationen (D) weiterleitet.

2. Verfahren nach Anspruch 1, bei dem
die erste netzseitige Funkstation (NodeB 1) die Nutzinformationen (D) an die erste netzseitige Einrichtung (RNC) weiterleitet.

3. Verfahren nach Anspruch 1, bei dem
die erste netzseitige Funkstation (NodeB 1) die Nutzinformationen (D) an eine zweite netzseitige Einrichtung (UPE) weiterleitet.

4. Verfahren nach einem der Ansprüche 2 bis 3, bei dem die erste netzseitige Einrichtung (RNC) der ersten netzseitigen Funkstation (NodeB 1) und/oder der zweiten netzseitigen Funkstation (NodeB 2) Anweisungen sendet betreffend die Weiterleitung der Nutzinformationen (D).

5. Verfahren nach einem der Ansprüche 2 bis 4, bei dem die erste netzseitige Einrichtung (RNC) die von der ersten netzseitigen Funkstation (NodeB 1) empfangenen Kontrollinformationen (C) mit den von der zweiten netzseitigen Funkstation (NodeB 2) empfangenen Kontrollinformationen (C) kombiniert und die resultierenden Kontrollinformationen (C) weiterleitet.

6. Verfahren nach einem der Ansprüche 2 bis 5, bei dem es sich bei der ersten netzseitigen Einrichtung (RNC) um einen Bestandteil der ersten netzseitigen Funkstation (NodeB 1) oder der zweiten netzseitigen Funkstation (NodeB 2) handelt.

7. Verfahren nach einem der Ansprüche 1 bis 6, bei dem die erste netzseitige Funkstation (NodeB 1) die Nutzinformationen (D) mit höherer Empfangsleistung (RX) empfängt als die zweite netzseitige Funkstation (NodeB 2).

8. Verfahren nach einem der Ansprüche 1 bis 7, bei dem zu einem späteren Zeitpunkt
die erste netzseitige Funkstation (NodeB 1) und die zweite netzseitige Funkstation (NodeB 2) die Kontrollinformationen (C) weiterleiten, und
lediglich die zweite netzseitige Funkstation (NodeB 2) die Nutzinformationen (D) weiterleitet.

9. Verfahren nach einem der Ansprüche 1 bis 7, bei dem zu einem späteren oder früheren Zeitpunkt die erste netzseitige Funkstation (NodeB 1) und die zweite netzseitige Funkstation (NodeB 2) die Kontrollinformationen (C) weiterleiten, und
die erste netzseitige Funkstation (NodeB 1) und die zweite netzseitige Funkstation (NodeB 2) die Nutzinformationen (D) weiterleiten.

10. Verfahren nach einem der Ansprüche 1 bis 9, bei dem
die Übertragung der Nutzinformationen (D) zu der ersten netzseitige Funkstation (NodeB 1) und der zweiten netzseitigen Funkstation (NodeB 2) unter Verwendung eines mehreren Teilnehmerstationen (UE 1, UE 2, UE 3, UE 4) gemeinsamen Aufwärtsrichtungs-Kanals erfolgt.

11. Verfahren nach einem der Ansprüche 1 bis 10, bei dem das Verfahren in Bezug auf eine Mehrzahl von Teilnehmerstationen (UE 1, UE 2, UE 3, UE 4) durchgeführt wird, wobei lediglich die erste netzseitige Funkstation (NodeB 1) von einer oder mehreren ersten Teilnehmerstationen (UE 3, UE 4) empfangene Nutzinformationen (D) weiterleitet und lediglich die zweite netzseitige Funkstation (NodeB 2) von einer oder mehreren zweiten Teilnehmerstationen (UE 1, UE 2) empfangene Nutzinformationen (D) weiterleitet.

12. Verfahren nach Anspruch 11, bei dem
von der ersten netzseitigen Funkstation (NodeB 1) und der zweiten netzseitigen Funkstation (NodeB 2) die Nutzinformationen (D) der ersten Teilnehmerstationen (UE 3, UE 4) innerhalb einer ersten Zeitspanne empfangen werden und die Nutzinformationen (D) der zweiten Teilnehmerstationen (UE 1, UE 2) innerhalb einer zweiten Zeitspanne empfangen werden.

13. Funkkommunikationssystem, umfassend zumindest eine erste netzseitige Funkstation (NodeB 1) und eine zweite netzseitige Funkstation (NodeB 2), mit
Mitteln der ersten netzseitigen Funkstation (NodeB 1) und der zweiten netzseitigen Funkstation (NodeB 2) zum Empfangen von von einer Teilnehmerstation (UE) gesendeten Nutzinformationen (D) und auf die Nutzinformationen (D) bezogenen Kontrollinformationen (C), **gekennzeichnet durch**
Mittel zum Weiterleiten der Kontrollinformationen (C) durch die erste netzseitige Funkstation (NodeB 1) und die zweite netzseitige Funkstation (NodeB 2) an eine erste netzseitige Einrichtung (RNC),
Mittel zum Weiterleiten der Nutzinformationen (D) lediglich **durch** die erste netzseitige Funkstation (NodeB 1).

## Claims

1. Method for communication by radio, in which a first network-end radio station (NodeB 1) and a second network-end radio station (NodeB 2) receive useful information (D) sent by a subscriber station (UE) and control information (C) relating to the useful information (D),
**characterized in that** the first network-end radio station (NodeB 1) and the second network-end radio station (NodeB 2) forward the control information (C) to a first network-end device (RNC), and
**in that** only the first network-end radio station (NodeB 1) forwards the useful information (D).

2. Method according to Claim 1, in which
the first network-end radio station (NodeB 1) forwards the useful information (D) to the first network-end device (RNC).

3. Method according to Claim 1, in which
the first network-end radio station (NodeB 1) forwards the useful information (D) to a second network-end device (UPE).

4. Method according to one of Claims 2 to 3, in which the first network-end device (RNC) sends the first network-end radio station (NodeB 1) and/or the second network-end radio station (NodeB 2) instructions concerning the forwarding of the useful information (D).

5. Method according to one of Claims 2 to 4,
in which
the first network-end device (RNC) combines the control information (C) received by the first network-end radio station (NodeB 1) with the control information (C) received by the second network-end radio station (NodeB 2) and forwards the resulting control information (C).

6. Method according to one of Claims 2 to 5, in which the first network-end device (RNC) is part of the first network-end radio station (NodeB 1) or of the second network-end radio station (NodeB 2).

7. Method according to one of Claims 1 to 6, in which the first network-end radio station (NodeB 1) receives the useful information (D) at higher reception power (RX) than the second network-end radio station (NodeB 2).

8. Method according to one of Claims 1 to 7, in which, at a later time,
the first network-end radio station (NodeB 1) and the second network-end radio station (NodeB 2) forward the control information (C), and
only the second network-end radio station (NodeB 2) forwards the useful information (D).

9. Method according to one of Claims 1 to 7, in which, at a later or earlier time,
the first network-end radio station (NodeB 1) and the second network-end radio station (NodeB 2) forward the control information (C), and
the first network-end radio station (NodeB 1) and the second network-end radio station (NodeB 2) forward the useful information (D).

10. Method according to one of Claims 1 to 9, in which the useful information (D) is transmitted to the first network-end radio station (NodeB 1) and to the second network-end radio station (NodeB 2) using an uplink channel which is common to a plurality of subscriber stations (UE 1, UE 2, UE 3, UE 4).

11. Method according to one of Claims 1 to 10, in which the method is carried out in relation to a plurality of subscriber stations (UE 1, UE 2, UE 3, UE 4),
wherein only the first network-end radio station (NodeB 1) forwards useful information (D) received from one or more first subscriber stations (UE 3, UE 4) and only the second network-end radio station (NodeB 2) forwards useful information (D) received from one or more second subscriber stations (UE 1, UE 2).

12. Method according to Claim 11, in which
the first network-end radio station (NodeB 1) and the second network-end radio station (NodeB 2) receive the useful information (D) from the first subscriber stations (UE 3, UE 4) within a first time period and receive the useful information (D) from the second subscriber stations (UE 1, UE 2) within a second time period.

13. Radio communication system, comprising at least a first network-end radio station (NodeB 1) and a second network-end radio station (NodeB 2), having
means in the first network-end radio station (NodeB 1) and in the second network-end radio station (NodeB 2) for receiving useful information (D) sent by a subscriber station (UE) and control information (C) relating to the useful information (D),
**characterized by**
means for the first network-end radio station (NodeB 1) and the second network-end radio station (NodeB 2) to forward the control information (C) to a first network-end device (RNC),
means for only the first network-end radio station (NodeB 1) to forward the useful information (D).

## Revendications

1. Procédé de communication radio dans lequel une première station radio (NodeB 1) côté réseau et une deuxième station radio (NodeB 2) côté réseau reçoivent des informations utiles (D) émises par une station d'usager (UE) et des informations de contrôle (C) relatives aux informations utiles (D),
**caractérisé en ce que** :
- la première station radio (NodeB 1) côté réseau et la deuxième station radio (NodeB 2) côté réseau retransmettent les informations de contrôle (C) à un premier dispositif (RNC) côté réseau ; et
- seule la première station radio (NodeB 1) côté réseau retransmet les informations utiles (D).

2. Procédé selon la revendication 1, dans lequel la première station radio côté réseau (NodeB 1) retransmet les informations utiles (D) au premier dispositif (RNC) côté réseau.

3. Procédé selon la revendication 1, dans lequel la première station radio (NodeB 1) côté réseau retransmet les informations utiles (D) à un deuxième dispositif (UPE) côté réseau.

4. Procédé selon l'une des revendications 2 à 3, dans lequel le premier dispositif (RNC) côté réseau envoie à la première station radio (NodeB 1) côté réseau et/ou à la deuxième station radio (NodeB 2) côté réseau des instructions concernant la retransmission des informations utiles (D).

5. Procédé selon l'une des revendications 2 à 4, dans lequel le premier dispositif (RNC) côté réseau combine les informations de contrôle (C) reçues de la première station radio (NodeB 1) côté réseau avec les informations de contrôle (C) reçues de la deuxième station radio (NodeB 2) côté réseau et retransmet les informations de contrôle (C) résultantes.

6. Procédé selon l'une des revendications 2 à 5, dans lequel le premier dispositif (RNC) côté réseau est un composant de la première station radio (NodeB 1) côté réseau ou de la deuxième station radio (NodeB 2) côté réseau.

7. Procédé selon l'une des revendications 1 à 6, dans lequel la première station radio (NodeB 1) côté réseau reçoit les informations utiles (D) avec une puissance de réception (RX) plus élevée que la deuxième station radio (NodeB 2) côté réseau.

8. Procédé selon l'une des revendications 1 à 7, dans lequel, à un instant ultérieur, la première station radio (NodeB 1) côté réseau et la deuxième station radio (NodeB 2) côté réseau retransmettent les informations de contrôle (C) et seule la deuxième station radio (NodeB 2) côté réseau retransmet les informations utiles (D).

9. Procédé selon l'une des revendications 1 à 7, dans lequel, à un instant ultérieur ou antérieur, la première station radio (NodeB 1) côté réseau et la deuxième station radio (NodeB 2) côté réseau retransmettent les informations de contrôle (C) et la première station radio (NodeB 1) côté réseau et la deuxième station radio (NodeB 2) côté réseau retransmettent les informations utiles (D).

10. Procédé selon l'une des revendications 1 à 9, dans lequel la transmission des informations utiles (D) vers la première station radio (NodeB 1) côté réseau et la deuxième station radio (NodeB 2) côté réseau s'effectue en utilisant un canal montant commun à plusieurs stations d'usager (UE 1, UE 2, UE 3, UE 4).

11. Procédé selon l'une des revendications 1 à 10, dans lequel le procédé est exécuté par rapport à une pluralité de stations d'usager (UE 1, UE 2, UE 3, UE 4), seule la première station radio (NodeB 1) côté réseau retransmettant des informations utiles (D) reçues d'une ou de plusieurs premières stations d'usager (UE 3, UE 4) et seule la deuxième station radio (NodeB 2) côté réseau retransmettant des informations utiles (D) reçues d'une ou de plusieurs deuxièmes stations d'usager (UE 1, UE 2).

12. Procédé selon la revendication 11, dans lequel la première station radio (NodeB 1) côté réseau et la deuxième station radio (NodeB 2) côté réseau reçoivent les informations utiles (D) des premières stations d'usager (UE 3, UE 4) dans un premier laps de temps et les informations utiles (D) des deuxièmes stations d'usager (UE 1, UE 2) dans un deuxième laps de temps.

13. Système de communication radio, comprenant au moins une première station radio (NodeB 1) côté réseau et une deuxième station radio (NodeB 2) côté réseau, avec des moyens de la première station radio (NodeB 1) côté réseau et de la deuxième station radio (NodeB 2) côté réseau pour recevoir des informations utiles (D) émises par une station d'usager (UE) et des informations de contrôle (C) relatives aux informations utiles (D), **caractérisé par** :
des moyens pour la retransmission des informations de contrôle (C) à un premier dispositif (RNC) côté réseau par la première station radio (NodeB 1) côté réseau et
la deuxième station radio (NodeB 2) côté réseau ;
des moyens pour la retransmission des informations utiles (D) uniquement par la première station radio (NodeB 1) côté réseau.
